# EUROPEAN PATENT SPECIFICATION

(11) **EP 4 603 685 B1**
(45) Date of publication and mention of the grant of the patent: **18.11.2026**
(21) Application number: 25151025.1
(22) Date of filing: 09.01.2025
(51) Int. Cl.: F01M 13/00, B60K 6/22, B60W 20/00, F01M 13/04

(54) **VEHICLE**
FAHRZEUG
VÉHICULE

(30) Priority: 13.02.2024 JP 2024019769
(43) Date of publication of application: 20.08.2025
(73) Proprietor: TOYOTA JIDOSHA KABUSHIKI KAISHA, Aichi-ken, 471-8571 (JP)
(72) Inventor: YAMANAKA, Noriyuki, Toyota-shi, 471-8571 (JP)
(74) Representative: Kuhnen & Wacker Patent- und Rechtsanwaltsbüro PartG mbB

(56) References cited:
- JP-A- 2008 254 731
- JP-A- 2010 173 548
- JP-A- 2023 070 389
- US-A1- 2003 140 908

## Description

### BACKGROUND OF THE INVENTION

### 1. Field of the Invention

The invention relates to a vehicle.

### 2. Description of Related Art

Vehicles disclosed in Japanese Unexamined Patent Application Publication No. 2022-185513 (JP 2022-185513 A) and No. 2010-173548 (JP 2010 173548 A) include a ventilation flow path connected to a crank chamber of an engine. The ventilation flow path discharges a blow-by gas from the crank chamber. Further, the vehicle includes an electric heater that heats the ventilation flow path. In a cold region, moisture may freeze inside the ventilation flow path, and the ventilation flow path may be blocked. In the vehicle of JP 2022-185513 A, with heating of the ventilation flow path using the electric heater after the engine is started, the freezing of the moisture in the ventilation flow path is suppressed. In JP 2010-173548 A the electronic control unit recognizes that the PCV valve is frozen. The PCV valve can be defrosted by turning on the heater.

### SUMMARY OF THE INVENTION

In the vehicle of JP 2022-185513 A, the electric heater is operated after the engine is started. For this reason, a temperature of the ventilation flow path may be low immediately after the engine is started. Thus, the blow-by gas may flow into the low-temperature ventilation flow path immediately after the engine is started, and the moisture may be frozen in the ventilation flow path. The present specification proposes a vehicle that suppresses the freezing of the moisture in the ventilation flow path immediately after the engine is started.

A first aspect of the invention relates to a vehicle including a battery, a charging inlet, a charging unit, an engine, and a ventilation flow path. The charging inlet is configured to convert electric power supplied to the charging inlet from an outside and supply the converted electric power to the battery to charge the battery. The ventilation flow path is connected to a crank chamber of the engine. The ventilation flow path includes a specific portion disposed along a surface of the charging unit.

In the vehicle according to the aspect, the specific portion may extend along any surface of a front surface, a rear surface, a right-side surface, a left-side surface, an upper surface, and a lower surface of the charging unit.

In the vehicle according to the aspect, a PCV (Positive Crank Case Ventilation) valve may or may not be provided in the ventilation flow path. Further, in the vehicle according to the aspect, the ventilation flow path may include two systems of a first ventilation flow path in which a PCV valve is provided and a second ventilation flow path in which the PCV valve is not provided. In this case, the ventilation flow path may be any one of the flow paths of two systems or may be both.

In the vehicle according to the aspect, the vehicle may further include an intake flow path that is disposed along a front surface of the charging unit and connected to an intake port of the engine. The specific portion of the ventilation flow path may extend along a side surface of the charging unit, and a front end of the specific portion may be connected to the intake flow path.

With the vehicle having the configuration as described above, it is possible to effectively heat a connection portion of the ventilation flow path and the intake flow path.

In the vehicle according to the aspect, the engine and the charging unit may be disposed side by side along a vehicle width direction in a compartment of the vehicle.

In the vehicle according to the aspect, the vehicle may further include an electric power supply outlet disposed in a vehicle cabin of the vehicle. The charging unit may be configured to execute an operation of converting electric power output from the battery and supplying the converted electric power to the electric power supply outlet.

With the vehicle having the configuration as described above, the charging unit can heat the ventilation flow path while the vehicle travels.

In the vehicle according to the aspect, the specific portion may be disposed at a position overlapping the charging unit in a height direction.

In the vehicle according to the aspect, the specific portion may extend to an end portion of the charging unit.

With the vehicle according to the aspect as described above, the charging unit charges the battery while the vehicle is stopped. The charging unit is operated by the electric power supplied from the outside via the charging inlet, and thus can be operated while the vehicle is stopped. With the operation of the charging unit while the vehicle is stopped, the charging unit generates heat. Since the specific portion of the ventilation flow path is disposed along the surface of the charging unit, the specific portion of the ventilation flow path is heated by the heat generated from the charging unit. As described above, in the vehicle, it is possible to preheat the ventilation flow path with the heat generated from the charging unit while the vehicle is stopped. Therefore, it is possible to suppress the freezing of the moisture in the ventilation flow path at the time of the start of the engine.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic diagram showing a vehicle according to an embodiment as an example of the present disclosure;
FIG. 2 is a plan view of a front compartment shown in FIG. 1 as viewed from above;
FIG. 3 is a diagram showing disposition of members at a position of a III-III line of FIG. 2;
FIG. 4 is a circuit diagram of an electric circuit connected to a battery shown in FIG. 1;
FIG. 5 is a circuit diagram of a bi-directional charging circuit housed in a charging unit shown in FIG. 4; and
FIG. 6 is a schematic diagram showing an intake system of an engine provided in the vehicle.

### DETAILED DESCRIPTION OF EMBODIMENTS

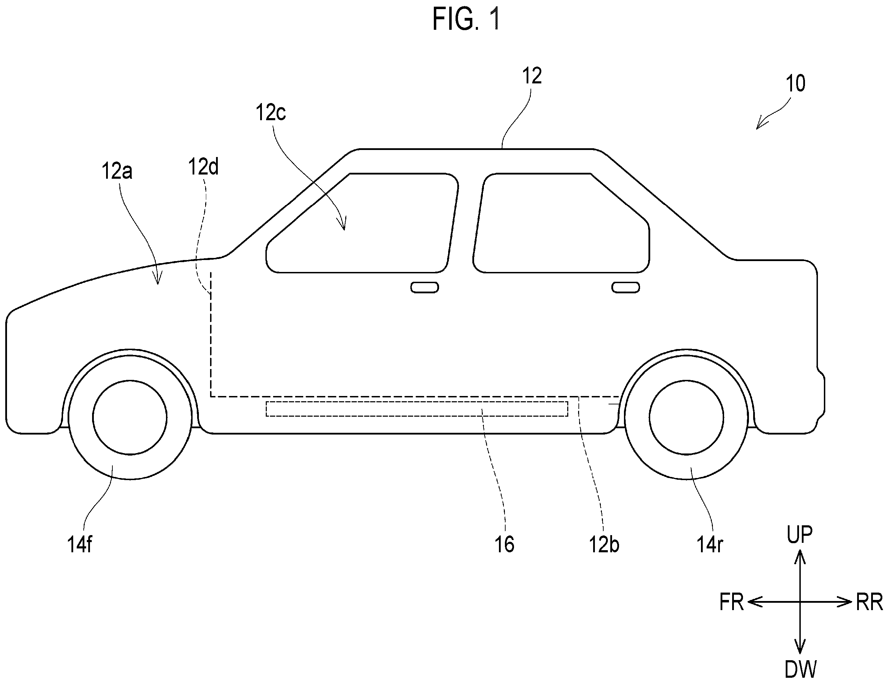

A vehicle 10 of the present embodiment shown in FIG. 1 is a plug-in hybrid electric vehicle (PHEV). In each drawing, a direction FR indicates a front of the vehicle, a direction RR indicates a rear of the vehicle, a direction LH indicates a left of the vehicle, a direction RH indicates a right of the vehicle, a direction UP indicates above the vehicle, and a direction DW indicates below the vehicle.

The vehicle 10 includes a vehicle body 12. A cabin 12c and a front compartment 12a, which is located in front of the cabin 12c, are provided in the vehicle body 12. The cabin 12c is configured to allow a user to get on. The vehicle body 12 includes a floor panel 12b and a dash panel 12d. The floor panel 12b constitutes a floor of the cabin 12c. The dash panel 12d is interposed between the cabin 12c and the front compartment 12a. The vehicle 10 includes front wheels 14f and rear wheels 14r.

The vehicle 10 includes a battery 16. The battery 16 is disposed under the floor panel 12b. The battery 16 is not particularly limited, and may be, for example, a lithium-ion battery or an all-solid battery.

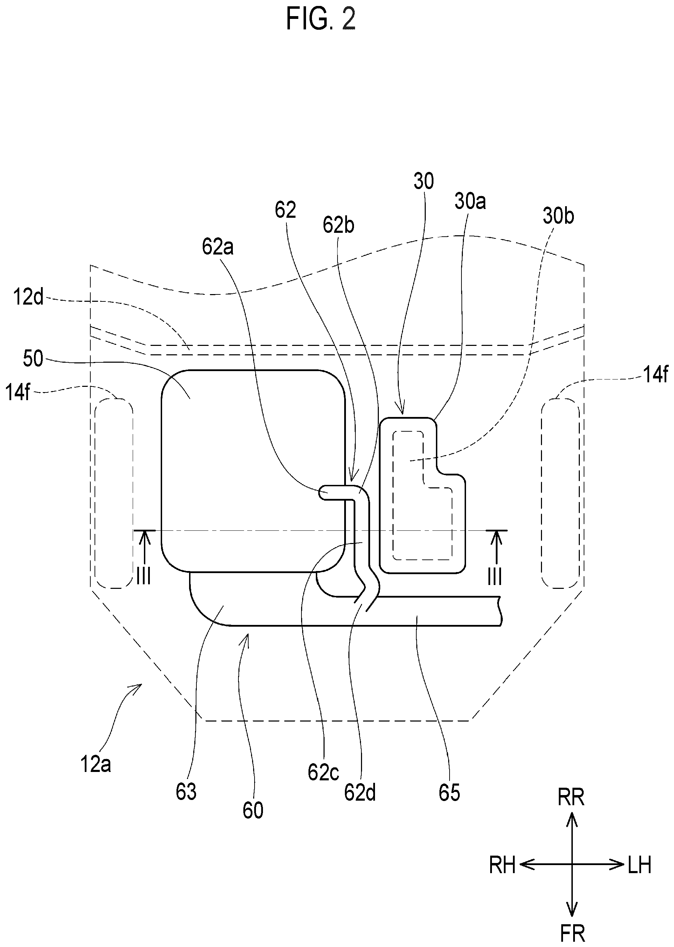

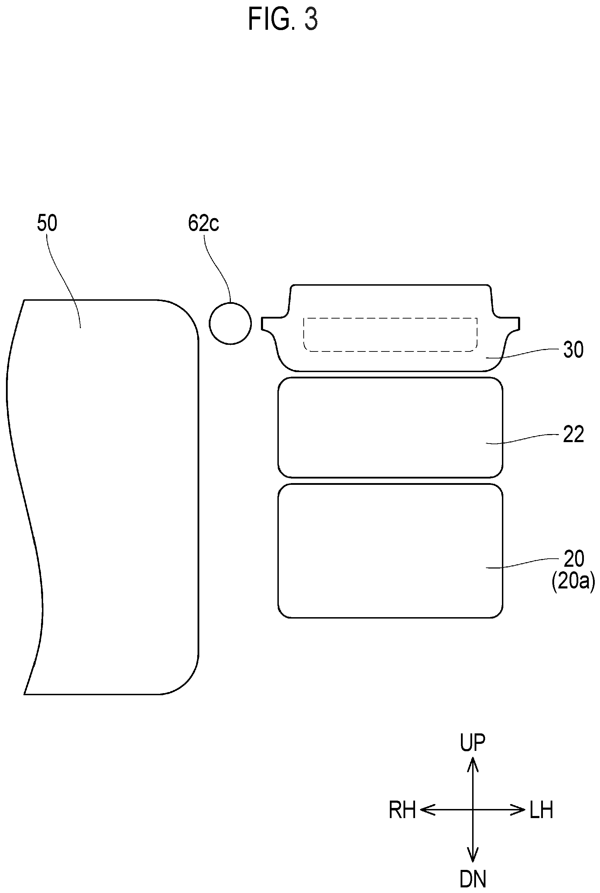

As shown in FIG. 2 and FIG. 3, a transaxle 20 and an engine 50 are provided in the front compartment 12a. A motor for traveling 20a and a speed reducer are built into the transaxle 20. The motor for traveling 20a is connected to a pair of front wheels 14f via the speed reducer. The engine 50 is a heat engine that generates power by burning fuel, and is not particularly limited. Examples thereof include a gasoline engine, a diesel engine, and a hydrogen engine. The engine 50 is connected to the front wheels 14f via the speed reducer (not shown). The engine 50 and the motor for traveling 20a cooperate with each other to drive the front wheels 14f.

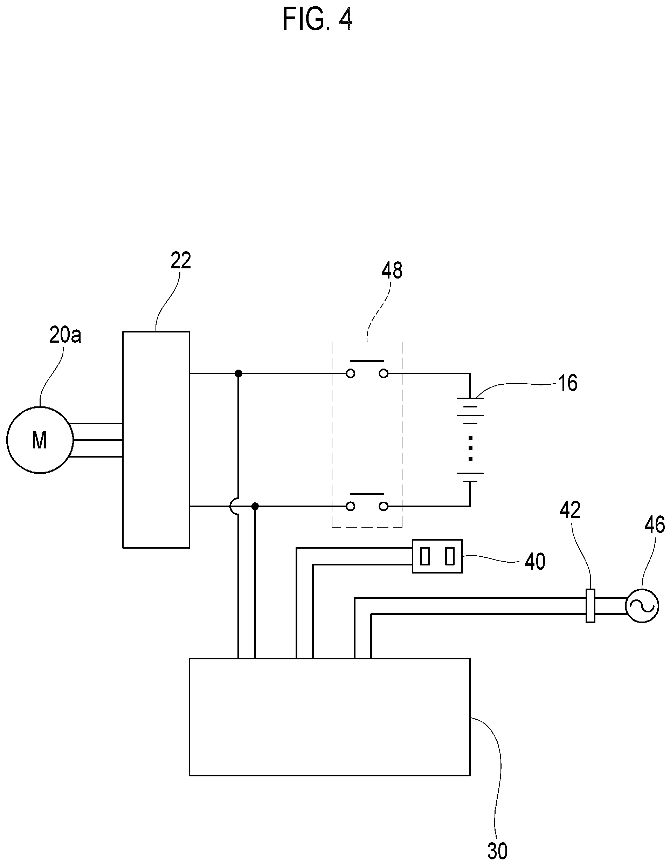

FIG. 4 shows an electric circuit connected to the battery 16 and the motor for traveling 20a. As shown in FIG. 4, the vehicle 10 includes a system main relay 48, a power control unit (PCU) 22, a charging unit 30, a charging inlet 42, and an electric power supply outlet 40.

The PCU 22 is connected to the motor for traveling 20a. Further, the PCU 22 is connected to the battery 16 via the system main relay 48. The PCU 22 converts direct-current electric power, which is supplied from the battery 16, into alternating-current electric power and supplies the alternating-current electric power to the motor for traveling 20a to operate the motor for traveling 20a. The PCU 22 controls an amplitude and a frequency of the alternating current supplied to the motor for traveling 20a to control a torque and a rotation speed of the motor for traveling 20a. As shown in FIG. 3, the PCU 22 is disposed in the front compartment 12a. The PCU 22 is disposed on an upper portion of the motor for traveling 20a.

The charging inlet 42 is provided in the vehicle body 12. The charging inlet 42 is provided at a position accessible from the outside of the vehicle body 12. The charging inlet 42 can be connected to an external alternating-current power source 46. The external alternating-current power source 46 is, for example, a commercial power source for home use. The charging inlet 42 of the present embodiment is connected to the external alternating-current power source 46 via a cable. Note that, as another embodiment, the charging inlet 42 may be wirelessly connected to the external alternating-current power source 46.

The electric power supply outlet 40 is disposed in the cabin 12c. The electric power supply outlet 40 can be connected to an electric machine. The electric power supply outlet 40 outputs the alternating-current electric power to the electric machine. The electric machine includes, for example, a home appliance, a personal computer, a smartphone, and a tablet terminal.

The charging unit 30 is connected to the battery 16 via the system main relay 48. Further, the charging unit 30 is connected to the charging inlet 42 and the electric power supply outlet 40. The charging unit 30 can execute a charging operation and an electric power supply operation. The charging unit 30 executes the charging operation when the vehicle 10 is stopped and the alternating-current power source 46 is connected to the charging inlet 42. In the charging operation, the charging unit 30 converts the alternating-current electric power, which is supplied from the alternating-current power source 46 to the charging inlet 42, into the direct-current electric power and supplies the direct-current electric power to the battery 16 to charge the battery 16. Further, the charging unit 30 executes the electric power supply operation in a state where ignition of the vehicle 10 is turned on. In the electric power supply operation, the charging unit 30 converts the direct-current electric power, which is supplied from the battery 16, into the alternating-current electric power and supplies the alternating-current electric power to the electric power supply outlet 40. As shown in FIGS. 2 and 3, the charging unit 30 is disposed in the front compartment 12a. The charging unit 30 is disposed on an upper portion of the PCU 22. In the front compartment 12a, the engine 50 and the charging unit 30 are disposed side by side in a vehicle width direction.

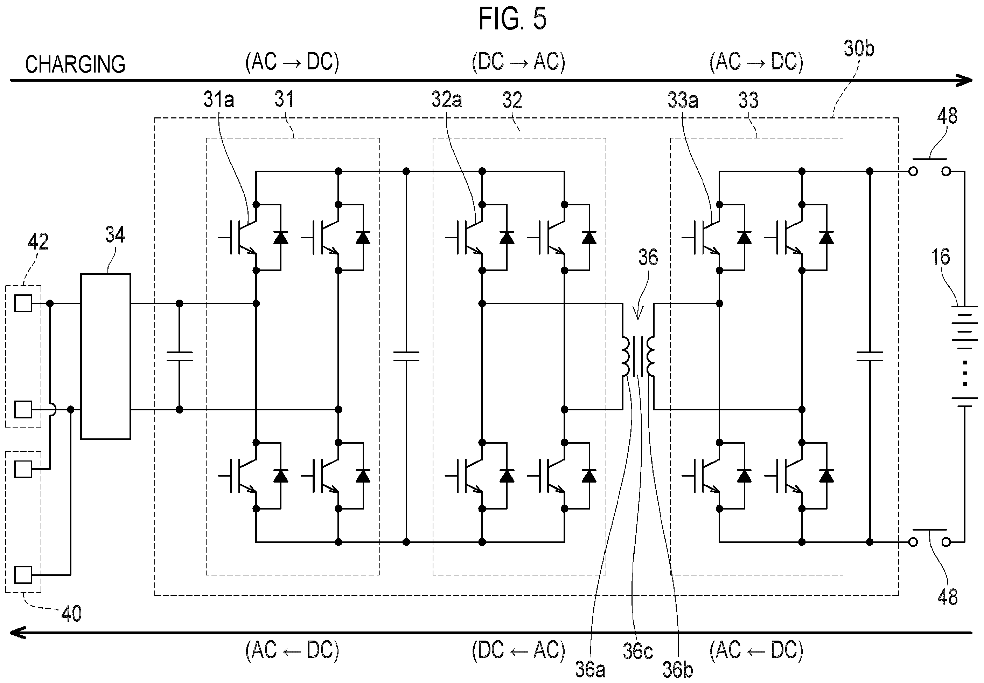

The charging unit 30 includes a casing 30a and a bi-directional charging circuit 30b housed in the casing 30a. As shown in FIG. 5, the bi-directional charging circuit 30b includes an insulating transformer 36 and conversion circuits 31 to 33.

The insulating transformer 36 includes a core 36c, a primary coil 36a, and a secondary coil 36b. The primary coil 36a and the secondary coil 36b are wound around the core 36c.

The conversion circuit 31 is connected to the charging inlet 42 and the electric power supply outlet 40 via a filter circuit 34. The conversion circuit 31 includes a plurality of switching elements 31a. A flyback diode is connected in parallel to each of the switching elements 31a.

The conversion circuit 32 is connected to the conversion circuit 31. Further, the conversion circuit 32 is connected to the primary coil 36a of the insulating transformer 36. The conversion circuit 32 includes a plurality of switching elements 32a. The flyback diode is connected in parallel to each of the switching elements 32a.

The conversion circuit 33 is connected to the secondary coil 36b of the insulating transformer 36. Further, the conversion circuit 33 is connected to the battery 16 via the system main relay 48. The conversion circuit 33 includes a plurality of switching elements 33a. The flyback diode is connected in parallel to each of the switching elements 33a.

A rightward arrow in FIG. 5 shows an outline of the charging operation. In the charging operation, the alternating-current electric power is supplied to the charging inlet 42. The conversion circuit 31 converts the alternating-current electric power, which is supplied from the charging inlet 42, into the direct-current electric power. The conversion circuit 32 converts the direct-current electric power, which is output from the conversion circuit 31, into high-frequency alternating-current electric power, and causes the alternating current to flow through the primary coil 36a. Therefore, the alternating current flows through the secondary coil 36b. The conversion circuit 33 converts the alternating-current electric power, which is supplied from the secondary coil 36b, into the direct-current electric power and supplies the direct-current electric power to the battery 16. Therefore, the battery 16 is charged.

A leftward arrow in FIG. 5 shows an outline of the electric power supply operation. In the electric power supply operation, the direct-current electric power is supplied from the battery 16 to the conversion circuit 33. The conversion circuit 33 converts the direct-current electric power, which is supplied from the battery 16, into the high-frequency alternating-current electric power, and causes the alternating current to flow through the secondary coil 36b. Therefore, the alternating current flows through the primary coil 36a. The conversion circuit 32 converts the alternating-current electric power, which is supplied from the primary coil 36a, into the direct-current electric power. The conversion circuit 31 converts the direct-current electric power, which is output from the conversion circuit 32, into the alternating-current electric power and supplies the alternating-current electric power to the electric power supply outlet 40.

As described above, the charging unit 30 (that is, the bi-directional charging circuit 30b) can selectively execute the charging operation and the electric power supply operation.

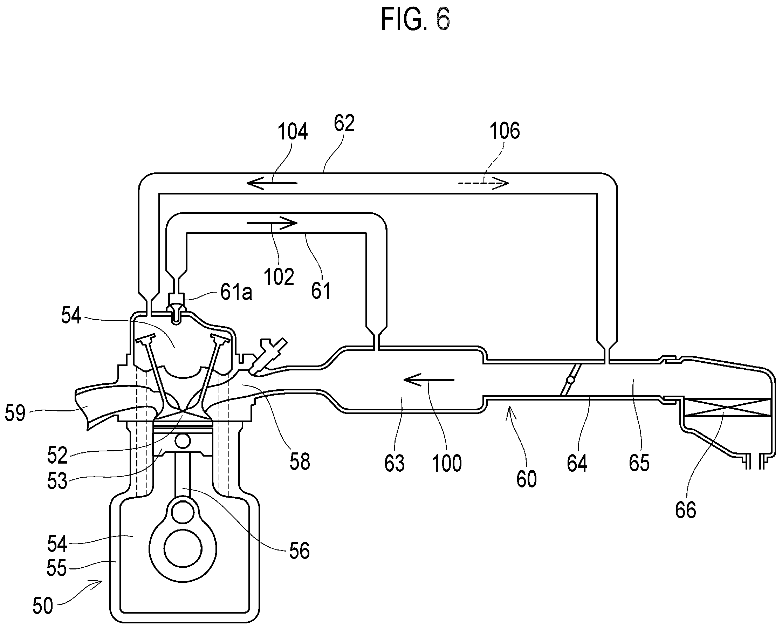

FIG. 6 schematically shows an intake system of the engine 50. As shown in FIG. 6, the engine 50 includes a combustion chamber 52 and a crank chamber 54. The crank chamber 54 is provided in a crankcase 55 and houses a crankshaft 56. The crank chamber 54 is separated from the combustion chamber 52 by a piston 53. The crank chamber 54 stores engine oil. An intake port 58 and an exhaust port 59 are provided in the combustion chamber 52. The vehicle 10 includes an intake flow path 60, a first ventilation flow path 61, and a second ventilation flow path 62. The intake flow path 60 is connected to the intake port 58 of the engine 50. The intake flow path 60 supplies air to the intake port 58. The first ventilation flow path 61 and the second ventilation flow path 62 are connected to the crank chamber 54 of the engine 50. The first ventilation flow path 61 and the second ventilation flow path 62 ventilate the crank chamber 54. Here, each of the "first ventilation flow path" and the "second ventilation flow path" is an example of "ventilation flow path" in the present disclosure.

The intake flow path 60 includes an intake manifold 63, a throttle body 64, an intake duct 65, and an air cleaner 66. A downstream end of the intake manifold 63 is connected to the intake port 58 of the engine 50. An upstream end of the intake manifold 63 is connected to a downstream end of the intake duct 65 via the throttle body 64. A throttle valve is provided in the throttle body 64. The intake duct 65 may be referred to as an intake pipe or an intake hose. An air cleaner 66 is provided at an upstream end of the intake duct 65. The air taken in from the outside of the vehicle 10 flows into the intake flow path 60 via the air cleaner 66. As shown by an arrow 100, the air is supplied to the intake port 58 via the intake flow path 60.

In the present embodiment, the first ventilation flow path 61 is configured by a positive crank case ventilation (PCV) hose. An upstream end of the first ventilation flow path 61 is connected to the crank chamber 54. A PCV valve 61a is provided at a connection portion of the first ventilation flow path 61 and the crank chamber 54. A downstream end of the first ventilation flow path 61 is connected to the intake manifold 63.

In the present embodiment, the second ventilation flow path 62 is configured by the PCV hose. A downstream end of the second ventilation flow path 62 is connected to the crank chamber 54, and an upstream end of the second ventilation flow path 62 is connected to the intake duct 65.

During the operation of the engine 50, a blow-by gas flows from the combustion chamber 52 to the crank chamber 54 through a gap between the piston 53 and a cylinder. As described below, the first ventilation flow path 61 and the second ventilation flow path 62 discharge the blow-by gas from the crank chamber 54 to the intake flow path 60. In a state where the engine 50 is operated at a low output (for example, idling state or low-speed traveling state), a pressure in the intake manifold 63 is low, and thus the PCV valve 61a is opened. Therefore, as indicated by an arrow 102 in FIG. 6, the blow-by gas flows from the crank chamber 54 to the intake manifold 63 via the first ventilation flow path 61. Further, as the blow-by gas flows through the first ventilation flow path 61, as indicated by an arrow 104, the air flows from the intake duct 65 to the crank chamber 54 via the second ventilation flow path 62. The blow-by gas discharged to the intake manifold 63 is sent to the combustion chamber 52 together with the air. In a state where the engine 50 is operated at a high output, the pressure in the intake manifold 63 is high, and thus the PCV valve 61a is closed. When the pressure in the crank chamber 54 is increased in this state, as indicated by an arrow 106 in FIG. 6, the blow-by gas flows back to the second ventilation flow path 62. That is, the blow-by gas flows from the crank chamber 54 to the intake duct 65 via the second ventilation flow path 62. The blow-by gas discharged to the intake duct 65 is sent to the combustion chamber 52.

FIG. 2 shows a disposition of the second ventilation flow path 62 and the intake flow path 60 in the front compartment 12a. As described above, the second ventilation flow path 62 is configured by the PCV hose. The second ventilation flow path 62 extends toward the charging unit 30 from a connection portion 62a to the engine 50 along the vehicle width direction. The second ventilation flow path 62 is bent at a bent portion 62b near the charging unit 30, and extends toward the front of the vehicle from the bent portion 62b along a right-side surface of the casing 30a of the charging unit 30 (that is, a surface on a right RH side). In the following, a portion extending along the side surface of the charging unit 30 in the second ventilation flow path 62 is referred to as a specific portion 62c. The specific portion 62c extends to an end portion of the front of the charging unit 30. In another embodiment, the direction in which the specific portion 62c extends is not limited to a vehicle front-rear direction, and the specific portion 62c may extend along the vehicle width direction or an upper and lower direction. As shown in FIG. 3, the specific portion 62c is disposed at a position overlapping the charging unit 30 in a height direction, and is disposed between the engine 50 and the charging unit 30. A shield member is not provided between the specific portion 62c and the right-side surface of the charging unit 30, and the specific portion 62c directly faces the right-side surface of the charging unit 30. As shown in FIG. 2, the intake duct 65 is disposed in front of the charging unit 30 and extends along the vehicle width direction along a front surface of the charging unit 30 (that is, a surface on a front FR side). Similarly to the specific portion 62c of the second ventilation flow path 62, the intake duct 65 is disposed at a position overlapping the charging unit 30 in the height direction. A front end (that is, a connection portion 62d) of the specific portion 62c is connected to the intake duct 65. Therefore, the entire specific portion 62c from the bent portion 62b to the connection portion 62d is disposed near the charging unit 30.

In a cold region, the temperature of the ventilation flow path is low while the vehicle is stopped. Then, when the engine is started and the blow-by gas flows through the ventilation flow path, moisture in the blow-by gas may be frozen in the ventilation flow path, and thus the ventilation flow path may be blocked. On the contrary, in the vehicle 10 of the present embodiment, the freezing of the moisture in the second ventilation flow path 62 is suppressed, as described below.

In the vehicle 10 of the present embodiment, when an external power source is connected to the charging inlet 42 while the vehicle is stopped, the charging operation for the battery 16 is executed by the charging unit 30. The charging unit 30 (particularly, the switching elements 31a to 33a and the insulating transformer 36) generates heat in the charging operation. When the charging unit 30 generates the heat, the specific portion 62c of the second ventilation flow path 62 disposed along the surface of the charging unit 30 is heated. Therefore, when the engine 50 is started and the blow-by gas flows into the second ventilation flow path 62, the freezing of the moisture in the second ventilation flow path 62 is suppressed. In particular, in the present embodiment, since the intake flow path 60 is disposed along the front surface of the charging unit 30 and the specific portion 62c is connected to the intake flow path 60 at the front end of the specific portion 62c, the entire specific portion 62c including the connection portion 62d is heated by the charging unit 30. The front end (that is, the connection portion 62d) of the specific portion 62c is a most downstream portion of the blow-by gas discharged from the engine 50, and is a portion where the blow-by gas is likely to be at a lowest temperature. With the configuration of the present embodiment, since the charging unit 30 can heat the connection portion 62d, it is possible to effectively suppress the freezing of the connection portion 62d. As described above, with the vehicle 10 of the present embodiment, it is possible to suppress the freezing of the moisture in the second ventilation flow path 62 immediately after the start of the engine 50.

Further, in the vehicle 10 of the present embodiment, the charging unit 30 executes the electric power supply operation to the electric power supply outlet 40 while the vehicle travels. Therefore, the charging unit 30 generates the heat even while the vehicle travels, and thus it is possible to suppress the freezing of the second ventilation flow path 62.

In the present embodiment described above, the second ventilation flow path 62 is disposed along the surface of the charging unit 30, but the first ventilation flow path 61 may be disposed along the surface of the charging unit 30 instead of the second ventilation flow path 62. In this case, it is possible to suppress the freezing of the moisture in the first ventilation flow path 61. Further, both the first ventilation flow path 61 and the second ventilation flow path 62 may be disposed along the surface of the charging unit 30. Further, in the above embodiment, although the shield member is not provided between the specific portion 62c and the charging unit 30, various members (not shown) may be disposed between the specific portion 62c and the charging unit 30 as long as heat transfer is possible from the charging unit 30 to the specific portion 62c.

Further, in the above embodiment, the specific portion 62c of the second ventilation flow path 62 extends along the right-side surface of the charging unit 30, but the specific portion 62c may extend along another surface (for example, a front surface, a rear surface, a left-side surface, an upper surface, or a lower surface) of the charging unit 30. Further, a configuration may be employed in which the disposition of FIG. 2 is rotated by 90 degrees or 180 degrees. Further, in the present embodiment, the vehicle is a front-engine/front-wheel drive (FF) vehicle, but the vehicle may have another drive method.

Although the embodiments of the disclosure of the present specification have been described in detail above, the embodiments are merely examples and do not limit the scope of the claims. The techniques described in the claims include various modifications and changes of the specific examples exemplified above. The technical elements described in the present specification or the drawings exhibit technical usefulness alone or in various combinations, and are not limited to the combinations described in the claims at the time of filing. Further, the techniques exemplified in the present specification or the drawings achieve a plurality of objectives at the same time, and achieving one of the objectives itself has technical usefulness.

## Claims

1. A vehicle (10) comprising:
a battery (16);
a charging inlet (42);
a charging unit (30) configured to convert electric power supplied to the charging inlet (42) from an outside and supply the converted electric power to the battery (16) to charge the battery (16);
an engine (50); and
a ventilation flow path (61, 62) connected to a crank chamber of the engine (50), **characterized in that** the ventilation flow path (61, 62) includes a specific portion (62c) disposed along a surface of the charging unit (30).

2. The vehicle (10) according to claim 1, wherein the specific portion (62c) extends along any surface of a front surface, a rear surface, a right-side surface, a left-side surface, an upper surface, and a lower surface of the charging unit (30).

3. The vehicle (10) according to claim 1 or 2, wherein a Positive Crank Case Ventilation valve (61a) is provided in the ventilation flow path (61, 62).

4. The vehicle (10) according to claim 1, wherein the ventilation flow path (61, 62) includes two systems of a first ventilation flow path (61) in which a Positive Crank Case Ventilation valve (61a) is provided and a second ventilation flow path (62) in which the Positive Crank Case Ventilation valve (61a) is not provided.

5. The vehicle (10) according to any one of claims 1 to 4, further comprising an intake flow path (60) that is disposed along a front surface of the charging unit (30) and connected to an intake port of the engine (50), wherein:
the specific portion (62c) of the ventilation flow path (61, 62) extends along a side surface of the charging unit (30); and
a front end of the specific portion (62c) is connected to the intake flow path (60).

6. The vehicle (10) according to any one of claims 1 to 5, wherein the engine (50) and the charging unit (30) are disposed side by side along a vehicle (10) width direction in a compartment of the vehicle (10).

7. The vehicle (10) according to any one of claims 1 to 5, further comprising an electric power supply outlet (40) disposed in a vehicle (10) cabin of the vehicle (10), wherein the charging unit (30) is configured to execute an operation of converting electric power output from the battery (16) and supplying the converted electric power to the electric power supply outlet (40).

8. The vehicle (10) according to any one of claims 1 to 5, wherein the specific portion (62c) is disposed at a position overlapping the charging unit (30) in a height direction.

9. The vehicle (10) according to any one of claims 1 to 5, wherein the specific portion (62c) extends to an end portion of the charging unit (30).

## Patentansprüche

1. Fahrzeug (10), aufweisend:
eine Batterie (16);
einen Ladeeinlass (42);
eine Ladeeinheit (30), die so konfiguriert ist, dass sie eine elektrische Leistung, die dem Ladeeinlass (42) von außen zugeführt wird, umwandelt und die umgewandelte elektrische Leistung der Batterie (16) zuführt, um die Batterie (16) aufzuladen;
eine Maschine (50); und
einen Belüftungsströmungsweg (61, 62), der mit einer Kurbelkammer der Maschine (50) verbunden ist,
**dadurch gekennzeichnet, dass**
der Belüftungsströmungsweg (61, 62) einen spezifischen Abschnitt (62c) umfasst, der entlang einer Oberfläche der Ladeeinheit (30) angeordnet ist.

2. Fahrzeug (10) nach Anspruch 1, wobei sich der spezifische Abschnitt (62c) entlang einer beliebigen Oberfläche von einer vorderen Oberfläche, einer hinteren Oberfläche, einer rechten Seitenoberfläche, einer linken Seitenoberfläche, einer oberen Oberfläche und einer unteren Oberfläche der Ladeeinheit (30) erstreckt.

3. Fahrzeug (10) nach Anspruch 1 oder 2, wobei ein Ventil (61a) für eine aktive Kurbelgehäuseentlüftung in dem Belüftungsströmungsweg (61, 62) vorgesehen ist.

4. Fahrzeug (10) nach Anspruch 1, wobei der Belüftungsströmungsweg (61, 62) zwei Systeme umfasst aus einem ersten Belüftungsströmungsweg (61), in dem ein Ventil (61a) für die aktive Kurbelgehäuseentlüftung vorgesehen ist, und einem zweiten Belüftungsströmungsweg (62), in dem das Ventil (61a) für die aktive Kurbelgehäuseentlüftung nicht vorgesehen ist.

5. Fahrzeug (10) nach einem der Ansprüche 1 bis 4, ferner aufweisend einen Einlassströmungsweg (60), der entlang einer vorderen Oberfläche der Ladeeinheit (30) angeordnet und mit einer Einlassöffnung der Maschine (50) verbunden ist, wobei:
sich der spezifische Abschnitt (62c) des Belüftungsströmungswegs (61, 62) entlang einer Seitenoberfläche der Ladeeinheit (30) erstreckt; und
ein vorderes Ende des spezifischen Abschnitts (62c) mit dem Einlassströmungsweg (60) verbunden ist.

6. Fahrzeug (10) nach einem der Ansprüche 1 bis 5, wobei die Maschine (50) und die Ladeeinheit (30) nebeneinander entlang einer Breitenrichtung des Fahrzeugs (10) in einem Fach des Fahrzeugs (10) angeordnet sind.

7. Fahrzeug (10) nach einem der Ansprüche 1 bis 5, ferner aufweisend einen in einem Fahrgastraum des Fahrzeugs (10) angeordneten Versorgungsauslass (40) für eine elektrische Leistung, wobei die Ladeeinheit (30) so konfiguriert ist, dass sie einen Vorgang zum Umwandeln einer elektrischen Leistung, die von der Batterie (16) abgegeben wird, und zum Zuführen der umgewandelten elektrischen Leistung an den Versorgungsauslass (40) für die elektrische Leistung ausführt.

8. Fahrzeug (10) nach einem der Ansprüche 1 bis 5, wobei der spezifische Abschnitt (62c) an einer Position angeordnet ist, die die Ladeeinheit (30) in einer Höhenrichtung überlappt.

9. Fahrzeug (10) nach einem der Ansprüche 1 bis 5, wobei sich der spezifische Abschnitt (62c) bis zu einem Endabschnitt der Ladeeinheit (30) erstreckt.

## Revendications

1. Un véhicule (10) comprenant :
une batterie (16) ;
une prise de charge (42) ;
une unité de charge (30) configurée pour convertir l'énergie électrique fournie à la prise de charge (42) depuis l'extérieur et pour fournir l'énergie électrique convertie à la batterie (16) afin de charger celle-ci ;
un moteur (50) ; et
un circuit de ventilation (61, 62) relié à la chambre de vilebrequin du moteur (50), **caractérisé en ce que** le circuit de ventilation (61, 62) comprend une partie spécifique (62c) disposée le long d'une surface de l'unité de charge (30).

2. Le véhicule (10) selon la revendication 1, dans lequel la partie spécifique (62c) s'étend le long de l'une quelconque des surfaces suivantes : une surface avant, une surface arrière, une surface latérale droite, une surface latérale gauche, une surface supérieure et une surface inférieure de l'unité de charge (30).

3. Le véhicule (10) selon la revendication 1 ou 2, dans lequel une soupape de ventilation active du carter (61a) est prévue dans le circuit de ventilation (61, 62).

4. Le véhicule (10) selon la revendication 1, dans lequel le circuit de ventilation (61, 62) comprend deux systèmes : un premier circuit de ventilation (61) dans lequel est prévue une soupape de ventilation active du carter (61a) et un second circuit de ventilation (62) dans lequel la soupape de ventilation active du carter (61a) n'est pas prévue.

5. Le véhicule (10) selon l'une quelconque des revendications 1 à 4, comprenant en outre un circuit d'admission (60) qui est disposé le long d'une surface avant de l'unité de charge (30) et relié à un orifice d'admission du moteur (50), dans lequel :
la partie spécifique (62c) du circuit d'aération (61, 62) s'étend le long d'une surface latérale de l'unité de charge (30) ; et
une extrémité avant de la partie spécifique (62c) est reliée au circuit d'admission (60).

6. Le véhicule (10) selon l'une quelconque des revendications 1 à 5, dans lequel le moteur (50) et l'unité de charge (30) sont disposés côte à côte dans le sens de la largeur du véhicule (10) dans un compartiment du véhicule (10).

7. Le véhicule (10) selon l'une quelconque des revendications 1 à 5, comprenant en outre une prise d'alimentation électrique (40) disposée dans l'habitacle du véhicule (10), dans lequel l'unité de charge (30) est configurée pour effectuer une opération consistant à convertir l'énergie électrique fournie par la batterie (16) et à fournir l'énergie électrique convertie à la prise d'alimentation électrique (40).

8. Le véhicule (10) selon l'une quelconque des revendications 1 à 5, dans lequel la partie spécifique (62c) est disposée à une position qui chevauche l'unité de charge (30) dans le sens de la hauteur.

9. Le véhicule (10) selon l'une quelconque des revendications 1 à 5, dans lequel la partie spécifique (62c) s'étend jusqu'à une partie d'extrémité de l'unité de charge (30).
